# EUROPEAN PATENT SPECIFICATION

(11) **EP 2 623 645 B1**
(45) Date of publication and mention of the grant of the patent: **18.11.2020**
(21) Application number: 11829163.2
(22) Date of filing: 28.09.2011
(51) Int. Cl.: C25D 9/10, B32B 9/00, C23C 26/00

(54) **COLD-ROLLED STEEL SHEET**
KALTGEWALZTES STAHLBLECH
TÔLE D'ACIER LAMINÉ À FROID

(30) Priority: 29.09.2010 JP 2010217991
(43) Date of publication of application: 07.08.2013
(73) Proprietor: JFE Steel Corporation, Tokyo 100-0011 (JP)
(72) Inventor: HOSHINO, Katsuya, Tokyo 100-0011 (JP); OOTSUKA, Shinji, Tokyo 100-0011 (JP); YANO, Takayoshi, Tokyo 100-0011 (JP)
(74) Representative: Grünecker Patent- und Rechtsanwälte PartG mbB
(86) International application number: PCT/JP2011/072153
(87) International publication number: WO 2012/043610

(56) References cited:
- EP-A1- 1 840 113
- JP-A- 7 180 064
- JP-A- 2006 274 385
- JP-A- 2006 274 385
- JP-A- 2010 059 513
- US-A- 5 507 883
- US-A1- 2007 213 445
- BUCHHEIT R.G., GUAN H.: "Formation and characteristics of Al-Zn hydrotalcite coatings on galvanized steel", JCT RESEARCH, vol. 1, no. 4, 1 October 2004 (2004-10-01) , pages 277-290, XP008185239,

## Description

### Field

The present invention relates to a cold rolled steel sheet having excellent press formability.

### Background

Cold rolled steel sheets are widely used in various fields with a focus on uses in automotive bodies. For such uses, they are subjected to press-forming to be made available for use. In particular, from a viewpoint of recent strengthening of CO₂ emission regulations, usage ratios of high-strength steel sheets tend to increase with the aim to reduce weights of automotive bodies. However, of cold rolled steel sheets, for those having a base material with a strength exceeding 440 MPa, the higher the strength of the base material, the higher the contact pressure during press forming becomes and the more the hardness of the cold rolled steel sheet approaches the hardness of a mold, and thus, there is a problem in that scratches called mold galling are likely to occur, which are formed by a cold rolled steel sheet being galled by a mold. More specifically, during continuous press forming, molds are severely worn down, and this adversely affects productivity of automobiles, by ruining the appearance of molded articles, for example.

As a method for suppressing the occurrence of mold galling in cold rolled steel sheets, a surface treatment on molds is widely used. In this method, however, adjustment of molds cannot be performed after a surface treatment. Further, this method has another problem of high cost. Therefore, there is a strong demand for cold rolled steel sheets harder to cause mold galling (with improved mold galling resistance).

A large number of techniques have been reported for forming lubricating films on the surfaces of cold rolled steel sheets. Patent Literature 1 describes a technique for forming on a steel sheet a lubricating film containing: an alkali metal borate; and, as a lubricant, a mixture of zinc stearate and a wax.

Patent Literature 2 describes a technique for forming on a steel sheet a lithium silicate as a film component with a wax and a metallic soap, which are added thereto as lubricants.

Patent Literature 3 describes a lubricant-coated steel sheet in which a polyurethane resin having a silanol group or a hydroxy group is formed with a thickness of 1 to 15 µm, and which has excellent continuous formability in high contact-pressure forming.
Further steel sheets or substrates comprising a film are disclosed in Patent Literatures 4 to 6.

### Citation List

### Patent Literature

Patent Literature 1: Japanese Patent Application Laid-open No. 2007-275706
Patent Literature 2: Japanese Patent Application Laid-open No. 2002-307613
Patent Literature 3: Japanese Patent Application Laid-open No. 2001-234119
Patent Literature 4: BUCHHEIT R.G., GUAN H.: "Formation and characteristics of Al-Zn hydrotalcite coatings on galvanized steel", JCT RESEARCH, vol. 1, no. 4, 1 October 2004 (2004-10-01), pages 277-290
Patent Literature 5: JP 2010 059513 A
Patent Literature 6: US 2007/213445 A1

### Summary

### Technical Problem

However, although in Patent Literature 1 to 3, lubricity is achieved by the lubricants or the like contained, required characteristics are not fully satisfied particularly in parts under high contact-pressure like high-strength cold rolled steel sheets.

It is an object of the present invention to provide a cold rolled steel sheet having excellent press formability, by which mold galling is hard to occur and elaborate press forming is possible, for difficult-to-form materials such as a high-strength steel sheet on which the contact pressure increases during press forming.

### Solution to Problem

Much of the lubricity of lubricating films depends on the lubricating performance of a lubricant in the film, and it is considered that development of a novel lubricant is required. The inventors of the present invention have thus diligently performed studies to invent a technique that utilizes deformation caused by an interlayer slip of a crystalline layered material as a lubricating mechanism. If the interlayer slip occurs by a low stress, resistance when the slip occurs is expected to be small even under a high pressure (contact pressure) and excellent lubricity is expected to be achieved. To discover specific crystalline layered materials, substances in which layers are bonded by a weak bonding strength such as an intermolecular force, hydrogen bonding, and electrostatic energy, were extracted. It has been found that by applying predetermined amounts of films containing those extracted crystalline layered materials on surfaces of cold rolled steel sheets, slidability is dramatically improved (sliding resistance is reduced). Further, it has been found that as the crystalline layered material a layered double hydroxide in which divalent and trivalent metal hydroxides are bonded with anions by electrostatic energy is suitable.

The present invention has been made based on the foregoing findings, and as specified in the appended claims.

### Advantageous Effects of Invention

According to the present invention, even for a high-strength cold rolled steel sheet in which a contact pressure increases during press forming, a cold rolled steel sheet is provided, which has a small sliding resistance in a part at which mold galling tends to occur and has excellent mold galling resistance. Further, a cold rolled steel sheet is obtained, which has excellent press formability in that mold galling is hard to occur and elaborate press forming is possible even in a part at which contact pressure is high and plating adhesion to the mold is supposed.

### Brief Description of Drawings

FIG. 1 is a schematic front view of a friction coefficient measuring apparatus.
FIG. 2 is a schematic perspective view illustrating a first shape and dimensions of a bead 6 in FIG. 1.
FIG. 3 is a schematic perspective view illustrating a second shape and dimensions of the bead 6 in FIG. 1. Description of Embodiments

A cold rolled steel sheet of the present invention has a film containing a crystalline layered material on a surface of the cold rolled steel sheet, and the film has an average film thickness of 10 nm to 2000 nm. These are the most important requirements of the cold rolled steel sheet of the present invention.

By applying a predetermined amount of the film containing the crystalline layered material on the surface of the cold rolled steel sheet, slidability is improved dramatically. A mechanism of lubrication of the crystalline layered material contained in the film may be understood as follows. When a mold and a cold rolled steel sheet slide, a shear stress is generated on a surface of the cold rolled steel sheet due to an adhesive force between the surfaces of the mold and the cold rolled steel sheet. The presence of a crystalline layered material between the cold rolled steel sheet and the mold causes deformation of the crystalline layered material due to interlayer slips and absorbance of a shear deformation stress generated on the surfaces. Even after the cold rolled steel sheet is worn down and the crystalline layered material is scraped off from the surface of the cold rolled steel sheet, the crystalline layered material adheres to the mold and exhibits an effect of reducing the friction resistance between the mold and the cold rolled steel sheet, and thus even under a high contact-pressure condition supposing a high-strength steel sheet, the effect is achieved sufficiently.

The thickness of the film containing the crystalline layered material is, as a thickness when observed from a cross section with a SEM, 10 nm or more and 2000 nm or less in average film thickness. When the average film thickness is less than 10 nm, it is hard to obtain the effect of improving the slidability sufficiently. When the average film thickness exceeds 2000 nm, there is a concern that spot weldability that is important in automobile manufacture may decrease. The thickness of the film is measured from a result of observing an FIB-processed cross section with an ultra-low acceleration SEM. Identification of a crystal structure about whether the crystalline layered material is crystalline may be performed by thin-film X-ray diffraction.

Further, in the present invention, the crystalline layered material is, from among unit crystal lattices, a crystal in which plate-shaped covalent bond crystals are layered over one another with relatively weak bonding such as an intermolecular force, hydrogen bonding, and electrostatic energy. A layered double hydroxide having a structure representable by [M²⁺_{1-X}M³⁺_{X}(OH)₂] [Aⁿ⁻ ]_{x/n}•zH₂O, in particular, has a layered crystal structure, since anions that are negatively charged are bonded with positively charged plate-shaped divalent and trivalent metal hydroxides by electrostatic energy in order to keep electric balance and has stacked layers, and is preferably used as the crystalline layered material of the present invention. Being the layered double hydroxide indicated by [M²⁺₁₋ₓM³⁺ₓ (OH)₂][Aⁿ⁻]x_{/n}•H₂O is known to be identifiable by X-ray diffraction and a substance representable by the formula is known to be a layered crystal. The crystalline material representable by [M²⁺₁-xM³⁺x(OH)₂][Aⁿ⁻]_{x/n}•zH₂O becomes layered because negatively charged anions are bonded with positively charged plate-shaped divalent and trivalent metal hydroxides by electrostatic energy in order to keep electric balance and these are stacked in layers.

The M²⁺ is one or more of Mg²⁺, Ca²⁺, Pb²⁺, and Sn²⁺. In particular, Mg²⁺ and Ca²⁺ are more preferable because they have been identified as layered double hydroxide species that are produced naturally or artificially and they are able to exist as layered double hydroxides stably.

The M³⁺ is one or more of Al³⁺, Fe³⁺, Cr³⁺, and Mo³⁺. In particular, Al³⁺, Fe³⁺, and Cr³⁺ are more preferable because they have been identified as layered double hydroxide species that are produced naturally or artificially and they are able to exist as layered double hydroxides stably.

The Aⁿ⁻ is preferably one or more of OH⁻, F⁻, CO₃²⁻ Cl⁻, Br⁻, (C₂O₄)²⁻, I⁻, (NO₃)⁻_{,} (SO₄)²⁻, (BrO₃)⁻, (IO₂)⁻, (V₁₀O₂₈ )⁶⁻, (Si₂O₅)²⁻, (ClO₄)⁻, (CH₃COO)⁻, [C₆H₄(CO₂)₂]²⁻, (C₆H₅COO)⁻, [C₈H₁₆ (CO₂)₂]²⁻, n(C₈H₁₇SO₄)⁻, n(C₁₂H₂₅SO₄)⁻, n(C₁₈H₃₇SO4)⁻, and SiO₄⁴⁻. They have been confirmed to be incorporated as interlayer anions of layered double hydroxides, and they are able to exist as layered double hydroxides. In particular, OH⁻, CO₃²⁻, Cl⁻, and (SO₄)²⁻ may be used as the anions more preferably because they are easier to be incorporated as the interlayer anions than other anions of layered double hydroxide species upon film formation on a surface of a cold rolled steels sheet, and the film formation is possible in a short period of time.

Next, a method of producing the crystalline layered material on the surface of a cold rolled steel sheet will be explained. A method using an electrochemical reaction will be described as an example of a method of producing a layered double hydroxide, which is one type of the crystalline layered material, on the surface of a cold rolled steel sheet. An electric current of 0.01 to 100 A/dm² is flowed in an acidic solution having a pH of 0.5 to 7.0 and containing any one or more of divalent cations (M²⁺), any one or more of trivalent cations (M³⁺), and any one or more anions of Aⁿ⁻ = (inorganic inions or organic anions) with the cold rolled steel sheet being a cathode.

Although a mechanism by which the crystalline layered material is produced is not clear, it may be understood as follows. When an electric current is flowed with the cold rolled steel sheet being a cathode, reduction of hydrogen ions or a decomposition reaction of dissolved oxygen occurs on the cold rolled steel sheet side, and the pH of the surface of the cold rolled steel sheet increases. The divalent cations and trivalent cations present in the acidic solution are produced in colloidal form as hydroxides in a region where the pH has increased on the surface of the cold rolled steel sheet. If any one or more of particular anions of OH⁻, F⁻, CO₃²⁻, Cl⁻, Br⁻, (C₂O₄)²⁻, I⁻, (NO₃)⁻, (SO₄)²⁻, (BrO₂)⁻, (IO₃)⁻, (V₁₀O₂₈)⁶⁻, (Si₂O₅)²⁻, (ClO₄)⁻, (CH₃COO)⁻, [C₆H₄(CO₂)₂]²⁻, (C₆H₅COO)⁻, [C₈H₁₆(CO₂)₂]²⁻, n(C₈H₁₇SO4)⁻, n(C12H₂₅SO₄)⁻, n(C₁₈H₃₇SO₄)⁻, and SiO4⁴⁻ are present in the solution, the metal hydroxides precipitate as a layered double hydroxide on the surface of the cold rolled steel sheet. Whether the obtained powdery substance is a layered compound may be confirmed by X-ray diffraction. Even if N, Pb, Na, Mn, Ba, Sr, Si, or the like is incorporated into the film containing the crystalline layered material produced, by inclusion of impurities in the treatment liquid used in film forming treatment or the like, the effect of the present invention is not impaired.

### EXAMPLE 1

The present invention will be explained in further detail with reference to examples. A cold rolled steel sheet having a plate thickness of 0.7 mm was subjected to temper rolling. Subsequently, as a process of producing the layered double hydroxide, the cold rolled steel sheet was immersed in a solution containing 113 g/L of magnesium nitrate hexahydrate, 83 g/L of aluminum nitrate nonahydrate, and 31 g/L of sodium carbonate decahydrate and having the pH adjusted to 5.0 with nitric acid, and electricity was conducted with a current density of 1 A/dm² with the cold rolled steel sheet being a cathode for 2 to 300 seconds. Next, after sufficient washing with water was performed, drying was performed.

An average film thickness of the film containing the layered double hydroxide on the surface of the cold rolled steel sheet obtained as described above was measured, and the layered double hydroxide was identified. As a method of evaluating press formability indicating ease of elaborate press forming, measurement of kinetic friction coefficients and evaluation of mold galling resistances were conducted. A method of measuring the average film thickness of the layered double hydroxide produced on the surface of the cold rolled steel sheet, a method of identifying the layered double hydroxide, a method of measuring the kinetic friction coefficient, and a method of measuring the mold galling resistance are as follows.

### (1) Method of measuring the average film thickness of the layered double hydroxide film

A cross section of the film was sputtered at 45 degrees using a focused ion beam (FIB), arbitrary ten points were extracted from a result of observing from the cross section with an ultra-low acceleration scanning electron microscope (SEM) and measured, and an average value thereof was regarded as the average film thickness of the film.

### (2) Method of identifying the layered double hydroxide

The presence of a crystalline layered double hydroxide was confirmed by a thin film X-ray diffraction method. Peaks obtained by the thin film method using a Cu-K α radiation with an incident angle of 0.5° were compared with ICDD cards to identify the layered double hydroxide. The matched cards were as follows:
Magnesium Aluminum Hydroxide Carbonate Hydrate
ICDD card reference code: 01-089-0460
[Mg_{0.667}Al_{0.333} (OH)₂] [CO3²⁻]₀._{167•}0.5H₂O

### (3) Method of measuring the kinetic friction coefficient

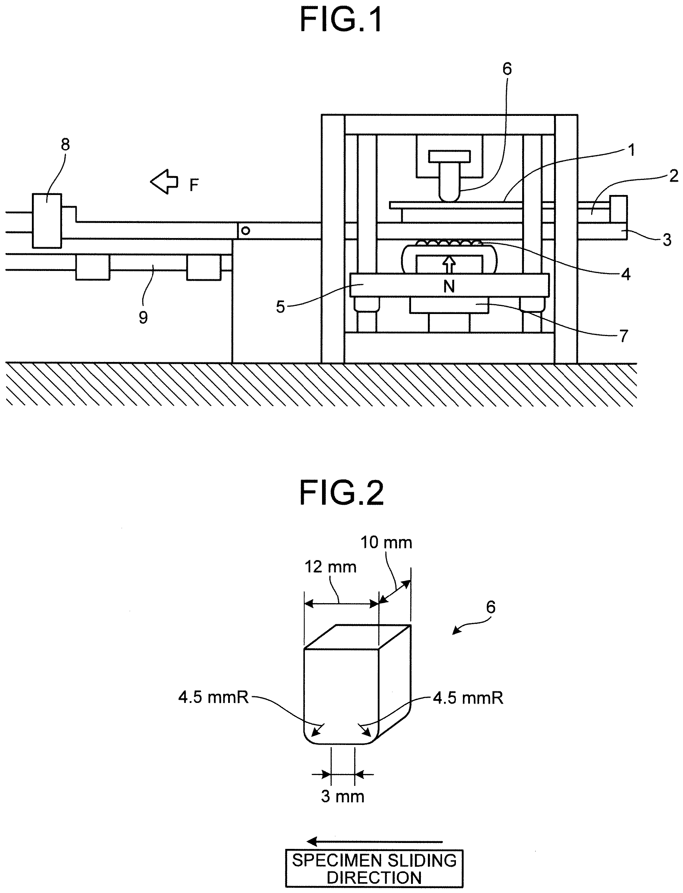

To evaluate the press formability (in particular, the press formability in drawing and inflow portions) the kinetic friction coefficient of each sample was measured as follows. FIG. 1 is a schematic front view illustrating a friction coefficient measuring apparatus. As illustrated in the figure, a kinetic friction coefficient measuring specimen 1 taken from a sample is fixed to a specimen stand 2, and the specimen stand 2 is fixed to an upper surface of a slide table 3, which is horizontally movable. On a lower surface of the slide table 3, a slide table support 5, which has rollers 4 contacting the lower surface and is vertically movable, is provided, and a first load cell 7 for measuring a pressing load N to the kinetic friction coefficient measuring specimen 1 from a bead 6 by pushing up the slide table support 5 is attached to the slide table support 5. To measure a sliding resistance force N for moving the slide table 3 horizontally with the above-described pressing force being acted, a second load cell 8 is attached to one end of the slide table 3. As a lubricating oil, the PRETON R352L manufactured by Sugimura Chemical Industrial Co., Ltd. was applied on the surface of the kinetic friction coefficient measuring specimen 1 to conduct tests.

FIG. 2 is a schematic perspective view illustrating a first shape and dimensions of the bead 6 used (hereinafter, bead shape 1). It is slid with a bottom surface of the bead 6 pressed against the surface of the kinetic friction coefficient measuring specimen 1. The shape of the bead 6 illustrated in FIG. 2 is formed of: a width of 10 mm; a length in a specimen sliding direction of 12 mm; and curved surfaces with a curvature of 4.5 mmR at portions of both ends in the sliding direction, and the bead's bottom surface, against which the specimen is pressed, has a plane with a width of 10 mm and a length in the sliding direction of 3 mm.

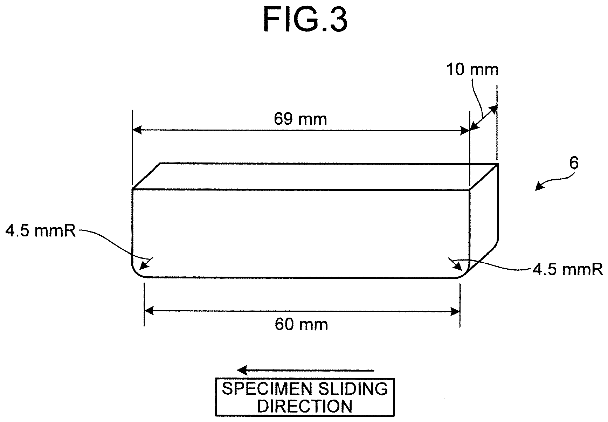

FIG. 3 is a schematic perspective view illustrating a second shape and dimensions of the bead 6 used (hereinafter, bead shape 2). It is slid with a bottom surface of the bead 6 pressed against the surface of the kinetic friction coefficient measuring specimen 1. The shape of the bead 6 illustrated in FIG. 3 is formed of: a width of 10 mm; a length in the specimen sliding direction of 69 mm; and curved surfaces with a curvature of 4.5 mmR at lower portions of both ends in the sliding direction, and the bead's bottom surface against which the specimen is pressed has a plane with a width of 10 mm and a length in the sliding direction of 60 mm.

The measurement of kinetic friction coefficients was conducted under three conditions in which the pressing loads N were 400, 1200, and 1600 kgf at room temperature (25°C) so that contact pressures supposing press forming of a high-strength steel sheet are exerted. The specimens' drawing speed (a horizontal moving speed of the slide table 3) was 100 cm/min or 20 cm/min. Under these conditions, the pressing load N and the sliding resistance force F were measured, and the kinetic friction coefficient µ between the sample and the bead 6 was calculated by the equation: µ = F/N.

Combinations of the bead shape, pressing load, and drawing speed are as follows:
Condition 1: Bead shape 1, a pressing load of 400 kgf, and a drawing speed of 100 cm/min
Condition 2: Bead shape 1, a pressing load of 1200 kgf, and a drawing speed of 100 cm/min
Condition 3 Bead shape 1, a pressing load of 1600 kgf, and a drawing speed of 100 cm/min
Condition 4: Bead shape 2, a pressing load of 400 kgf, and a drawing speed of 20 cm/min

### Method of measuring mold galling resistance

In addition to the kinetic friction coefficient, in cold rolled steel sheets, mold galling is likely to occur because a cold rolled steel sheet and a mold adhere to each other in portions having a long sliding distance and the sliding resistance increases. Using the friction coefficient measuring apparatus illustrated in FIG. 1, therefore, sliding tests were repeated 50 times, and mold galling resistance was evaluated, with a count of how many repeated times the kinetic friction coefficient increased by 0.01 or more being regarded as a repeat count of mold galling occurrences. If no increase in the kinetic friction coefficient was recognized even after the sliding tests were repeated 50 times, the repeat count was regarded as 50 times or more. The test were conducted, like the above-described (3) method of measuring the kinetic friction coefficient, under the above-described conditions 1 to 3 so that a contact pressure supposing press forming of a high-strength steel sheet was realized.

The test results thus obtained are listed in Table 1 with the conditions.

**Table 1**

| No. | Plating type | Solution used | Electric conduction time (sec) | Film thickness (nm) | Composition of layered double hydroxide (Identification results) | Kinetic friction coefficient | | | | Mold galling resistance | | | Notes |
|---|---|---|---|---|---|---|---|---|---|---|---|---|---|
| | | | | | | Condition 1 | Condition 2 | Condition 3 | Condition 4 | Condition 1 | Condition 2 | Condition 3 | |
| 1 | Cold rolled steel sheet | No treatment | none | none | - | 0.137 | 0.113 | -*4 | 0.171 | 50 or more | 5 | 0 | Comparative Example |
| 2 | | Magnesium nitrate hexahydrate: 113 g/L Aluminum nitrate nonahydrate: 83 g/L Sodium carbonate decahydrate: 31 g/L | 2 | 2 nm | ICDD card reference code: 01-089-0460 [Mg_{0.667}Al_{0.333}(OH)₂][CO₃²]_{0.167}•0.5H₂O Magnesium Aluminum Hydroxide Carbonate Hydrate | 0.119 | 0.095 | 0.075 | 0.162 | 7 | 4 | 3 | Comparative Example |
| 3 | | | 8 | 10 nm | | 0.104 | 0.074 | 0.067 | 0.135 | 15 | 10 | 8 | Inventive Example |
| 4 | | | 30 | 50 nm | | 0.098 | 0.072 | 0.065 | 0.132 | 34 | 21 | 16 | Inventive Example |
| 5 | | | 60 | 100 nm | | 0.092 | 0.069 | 0.063 | 0.119 | 50 or more | 34 | 26 | Inventive Example |
| 6 | | | 300 | 500 nm | | 0.085 | 0.064 | 0.060 | 0.110 | 50 or more | 42 | 32 | Inventive Example |

| | | | | | | | | | | | | | |
|---|---|---|---|---|---|---|---|---|---|---|---|---|---|
| *4: Immeasurable due to occurrence of mold galling | | | | | | | | | | | | | |

The following has become clear from the test results listed in Table 1. No. 1 is a cold rolled steel sheet not subjected to a film forming treatment and a comparative example with respect to the present invention. All of its kinetic friction coefficients are of high values. No. 1 is an example in which no crystalline layered material is adhered to the surface of the cold rolled steel sheet and a comparative example with respect to the present invention. Its kinetic friction coefficients are high, and the mold galling resistances are inferior. No. 2 have the crystalline layered material applied on the surface of the cold rolled steel sheet, but its average film thickness is out of the scope of the present invention and it is another comparative example with respect to the present invention. Its kinetic friction coefficients are lower than those of No. 1, and although the mold galling resistances are improved, it cannot be said to be sufficient. Nos. 3 to 6 have the crystalline layered material applied on the surface of the cold rolled steel sheet, their average film thicknesses are within the scope of the present invention, and they are examples of the present invention. The inventive examples, Nos. 3 to 6, have lower kinetic friction coefficients and better mold galling resistances as compared with the comparative examples, Nos. 1 and 2.

### EXAMPLE 2

A cold rolled steel sheet having a plate thickness of 0.7 mm was subjected to temper rolling. Subsequently, as a process of forming a layered double hydroxide, the cold rolled steel sheet was immersed in a solution containing the composition listed in Table 2 and having a pH adjusted to 5.0 using nitric acid, and electricity was conducted with a current density of 1 A/dm² with the cold rolled steel sheet being a cathode for 2 to 300 seconds. Next, this cold rolled steel sheet was sufficiently washed with water and thereafter dried.

For the cold rolled steel sheet obtained as described above, the average film thickness of the layered double hydroxide film on the surface thereof was measured, and the layered double hydroxide was identified. As a method of evaluating press formability, measurement of kinetic friction coefficients and evaluation of mold galling resistances were conducted. A method of measuring the average film thickness of the layered double hydroxide on the surface of the cold rolled steel sheet, a method of identifying the layered double hydroxides, a method of measuring the kinetic friction coefficient, and a method of measuring a mold galling resistance are the same as those in Example 1. The matched ICDD cards were as follows.
(a) Zinc Aluminum Carbonate Hydroxide Hydrate ICDD card reference code: 00-048-1021

   [Zn_{0.71}Al_{0.29}(OH)₂][CO3²⁻]₀.₁₄₅•H₂O
(b) Iron Carbonate Hydroxide Hydrate ICDD card reference code: 00-050-1380

   [Fe_{0.67}Fe_{0.33}(OH)₂][CO3²⁻]_{0.145}•0.33H₂O
(c) Iron Nickel Sulfate Hydroxide Hydrate ICDD card reference code: 00-042-0573

   [Ni_{0.75}Fe_{0.25}(OH)₂][SO₄²⁻]_{0.125}•0.5H₂O
(d) Magnesium Aluminum Hydroxide Hydrate ICDD card reference code: 00-038-0478

   [Mg_{0.75}Al_{0.25}(OH)₂][OH⁻]_{0.25}•₀.5H₂O
(e) Magnesium Iron Oxide Chloride Hydroxide Hydrate ICDD card reference code: 00-020-0500

   [Mg_{0.75}Fe_{0.25}(OH)₂][Cl⁻]_{0.25}•0.5H₂O
(f) Calcium Aluminum Hydroxide Chloride Hydrate ICDD card reference code: 00-035-0105
   17

   [Ca_{0.67}Al_{0.33}(OH)₂][Cl⁻]_{0.33}•0.67H₂O
(g) Magnesium Chromium Carbonate Hydroxide Hydrate ICDD card reference code: 00-045-1475

   [Mg_{0.67}Cr_{0.33}(OH)₂][CO₃²⁻]_{0.157}•0.5H₂O
(h) Iron Aluminum Oxide Carbonate Hydroxide Hydrate ICDD card reference code: 00-051-1527

   [Fe_{0.67}Al_{0.33}(OH)₂][CO₃²⁻]_{0.157}•0.5H₂O
(i) Nickel Aluminum Oxide Carbonate Hydroxide Hydrate ICDD card reference code: 00-015-0087

   [Ni_{0.67}Al_{0.33}(OH)₂][CO₃²⁻,OH-]₀.₁₅₇•0.5H₂O

The test results obtained as described above are listed in Table 2 with the conditions.

**Table 2**

| No. | Plating type | Solution used | Electric conduction time (sec) | Film thickness (nm) | Composition of layered double hydroxide (identification results) | Kinetic friction coefficient | | | | Mold galling resistance | | | Notes |
|---|---|---|---|---|---|---|---|---|---|---|---|---|---|
| | | | | | | Condition 1 | Condition 2 | Condition 3 | Condition 4 | Condition 1 | Condition 2 | Condition 3 | |
| 7 | | No treatment | none | 0.0 | | 0.137 | 0.113 | -*1 | 0.171 | 50 or more | 5 | 0 | Comparative Example |
| 8 | | Zinc nitrate heptahydrate: 131 g/L Aluminum nitrate nonahydrate: 83 g/L Sodium carbonate decahydrate: 31 g/L | 2 | 2 nm | ICDD card reference code: 00-048-1021 [Zn_{0.71}Al_{0.29}(OH)₂][CO₃²⁻]_{0.145}•H₂O Zinc Aluminum Carbonate Hydroxide Hydrate | 0.121 | 0.093 | 0.075 | 0.159 | 6 | 3 | 3 | Comparative Example |
| 9 | | | 8 | 10 nm | | 0.105 | 0.075 | 0.068 | 0.135 | 20 | 11 | 8 | Comparative Example |
| 10 | | | 30 | 50 nm | | 0.095 | 0.073 | 0.064 | 0.131 | 35 | 21 | 16 | Comparative Example |
| 11 | | | 60 | 100 nm | | 0.090 | 0.068 | 0.062 | 0.119 | 50 or more | 33 | 22 | Comparative Example |
| 12 | | | 300 | 500 nm | | 0.082 | 0.063 | 0.057 | 0.112 | 50 or more | 41 | 32 | Comparative Example |
| 13 | | Iron(II) sulfate heptahydrate: 122 g/L Iron(III) nitrate nonahydrate: 89 g/L Sodium carbonate decahydrate: 31 g/L | 2 | 2 nm | ICDD card reference code: 00-050-1380 [Fe_{0.67}Fe_{0.33}(OH)₂] [C0₃²⁻]_{0.145}•0.33H₂O Iron Carbonate Hydroxide Hydrate | 0.123 | 0.080 | 0.073 | 0.161 | 5 | 3 | 3 | Comparative Example |
| 14 | | | 8 | 10 nm | | 0.103 | 0.070 | 0.069 | 0.133 | 22 | 12 | 9 | Comparative Example |
| 15 | | | 30 | 50 nm | | 0.092 | 0.072 | 0.066 | 0.119 | 38 | 22 | 14 | Comparative Example |
| 16 | Cold rolled steel sheet | | 60 | 100 nm | | 0.078 | 0.069 | 0.061 | 0.112 | 50 or more | 31 | 25 | Comparative Example |
| 17 | | | 300 | 500 nm | | 0.083 | 0.094 | 0.058 | 0.101 | 50 or more | 42 | 34 | Comparative Example |
| 18 | | Nickel nitrate hexahydrate: 128 g/L lron(III) nitrate nonahydrate: 89 g/L Sodium sulfate decahydrate: 31 g/L | 2 | 2 nm | ICDD card reference code: 00-042-0573 [Ni_{0.75}Fe_{0.25}(OH)₂][SO₄²⁻]_{0.125}•0.5H₂O Iron Nickel Sulfate Hydroxide Hydrate | 0.122 | 0.098 | 0.078 | 0.155 | 6 | 4 | 3 | Comparative Example |
| 19 | | | 8 | 10 nm | | 0.102 | 0.073 | 0.067 | 0.129 | 19 | 12 | 9 | Comparative Example |
| 20 | | | 30 | 50 nm | | 0.090 | 0.071 | 0.063 | 0.121 | 40 | 20 | 16 | Comparative Example |
| 21 | | | 60 | 100 nm | | 0.079 | 0.070 | 0.059 | 0.113 | 50 or more | 31 | 20 | Comparative Example |
| 22 | | | 300 | 500 nm | | 0.080 | 0.066 | 0.057 | 0.099 | 50 or more | 42 | 33 | Comparative Example |
| 23 | | Magnesium nitrate hexahydrate: 113 g/L Aluminum nitrate nonahydrate: 83 g/L | 2 | 2 nm | ICDD card reference code: 00-038-0478 [Mg_{0.75}Al_{0.25}(OH)₂][OH⁻]_{0.25}•0.5H₂O Magnesium Aluminum Hydroxide Hydrate | 0.119 | 0.090 | 0.072 | 0.158 | 7 | 5 | 3 | Comparative Example |
| 24 | | | 8 | 10 nm | | 0.103 | 0.073 | 0.070 | 0.132 | 19 | 11 | 8 | Inventive Example |
| 25 | | | 30 | 50 nm | | 0.089 | 0.070 | 0.065 | 0.123 | 39 | 23 | 16 | Inventive Example |
| 26 | | | 60 | 100 nm | | 0.085 | 0.069 | 0.060 | 0.111 | 50 or more | 33 | 22 | Inventive Example |
| 27 | | | 300 | 500 nm | | 0.075 | 0.064 | 0.059 | 0.103 | 50 or more | 41 | 32 | Inventive Example |
| 28 | | Magnesium nitrate hexahydrate: 113 g/L Iron(III) nitrate nonahydrate_{'} 89g/L Sodium chloride: 6 q/L | 2 | 2 nm | ICDD card reference code: 00-020-0500 [Mg_{0.75}Fe_{0.25}(OH)₂₁[Cl⁻]_{0.25}•0.5H₂O Magnesium Iron Oxide Chloride Hydroxide Hydrate | 0.125 | 0.078 | 0.079 | 0.155 | 6 | 3 | 3 | Comparative Example |
| 29 | | | 8 | 10 nm | | 0.101 | 0.074 | 0.068 | 0.141 | 21 | 10 | 7 | Inventive Example |
| 30 | | | 30 | 50 nm | | 0.095 | 0.072 | 0.061 | 0.119 | 33 | 25 | 19 | Inventive Example |
| 31 | | | 60 | 100 nm | | 0.083 | 0.070 | 0.061 | 0.112 | 50 or more | 33 | 21 | Inventive Example |
| 32 | | | 300 | 500 nm | | 0.078 | 0.064 | 0.060 | 0.105 | 50 or more | 43 | 30 | Inventive Example |
| 33 | | Calcium nitrate tetrahydrate: 104 g/L Aluminum nitrate nonahydrate: 83 g/L Sodium chloride: 6 g/L | 2 | 2 nm | ICDD card reference code: 00-035-0105 [Ca_{0.67}Al_{0.33}(OH)₂][Cl⁻]0.33•0.67H₂O Calcium Aluminum Hydroxide Chloride Hydrate | 0.122 | 0.081 | 0.080 | 0.162 | 5 | 4 | 3 | Comparative Example |
| 34 | | | 8 | 10 nm | | 0.108 | 0.075 | 0.064 | 0.130 | 23 | 12 | 9 | Inventive Example |
| 35 | | | 30 | 50 nm | | 0.097 | 0.072 | 0.062 | 0.118 | 36 | 20 | 16 | Inventive Example |
| 36 | 36 | | 60 | 100 nm | | 0.082 | 0.070 | 0.060 | 0.113 | 50 or more | 34 | 20 | Inventive Example |
| 37 | | | 300 | 500 nm | | 0.079 | 0.065 | 0.057 | 0.095 | 50 or more | 42 | 32 | Inventive Example |
| 38 | | Magnesium nitrate hexahydrate: 113 g/L Chromium(III) nitrate nonahydrate: 88 g/L Sodium carbonate decahydrate: 31 q/L | 2 | 2 nm | ICDD card reference code: 00-045-1475 [Mg_{0.67}Cr_{0.33}(OH)₂] [C0₃²⁻]_{0.157}•0.5H₂O Magnesium Chromium Carbonate Hydroxide Hydrate | 0.130 | 0.080 | 0.076 | 0.160 | 6 | 4 | 3 | Comparative Example |
| 39 | | | 8 | 10 nm | | 0.102 | 0.076 | 0.066 | 0.125 | 21 | 13 | 8 | Inventive Example |
| 40 | | | 30 | 50 nm | | 0.082 | 0.072 | 0.064 | 0.118 | 30 | 21 | 16 | Inventive Example |
| 41 | | | 60 | 100 nm | | 0.081 | 0.071 | 0.059 | 0.110 | 50 or more | 32 | 24 | Inventive Example |
| 42 | | | 300 | 500 nm | | 0.078 | 0.070 | 0.056 | 0.096 | 50 or more | 44 | 31 | Inventive Example |
| 43 | | Iron(II) sulfate heptahydrate: 122 g/L Aluminum nitrate nonahydrate: 83 g/L Sodium carbonate decahydrate: 31 g/L | 2 | 2 nm | ICDD card reference code: 00-051-1527 [Fe_{0.67}Al_{0.33}(OH)₂][CO₃²⁻]₀.₁₅₇•0.5H₂O Iron Aluminum Oxide Carbonate Hydroxide Hydrate | 0.125 | 0.083 | 0.077 | 0.158 | 5 | 3 | 3 | Comparative Example |
| 44 | | | 8 | 10 nm | | 0.100 | 0.072 | 0.068 | 0.128 | 20 | 10 | 7 | Comparative Example |
| 45 | | | 30 | 50 nm | | 0.081 | 0.071 | 0.062 | 0.117 | 33 | 24 | 18 | Comparative Example |
| 46 | | | 60 | 100 nm | | 0.082 | 0.070 | 0.061 | 0.112 | 50 or more | 30 | 22 | Comparative Example |
| 47 | | | 300 | 500 nm | | 0.072 | 0.065 | 0.055 | 0.105 | 50 or more | 45 | 33 | Comparative Example |
| 48 | | Nickel nitrate hexahydrate: 128 g/L Aluminum nitrate nonahydrate: 83 g/L Sodium carbonate decahydrate: 31 g/L | 2 | 2 nm | ICDD card reference code: 00-015-0087 [Ni_{0.67}Al_{0.33}(OH)₂] [CO₃²⁻,OH⁻]_{0.157}•0.5H₂O Nickel Aluminum Oxide Carbonate Hydroxide Hydrate | 0.124 | 0.084 | 0.075 | 0.157 | 6 | 3 | 3 | Comparative Example |
| 49 | | | 8 | 10 nm | | 0.105 | 0.075 | 0.065 | 0.129 | 19 | 11 | 8 | Comparative Example |
| 50 | | | 30 | 50 nm | | 0.093 | 0.072 | 0.061 | 0.120 | 36 | 27 | 19 | Comparative Example |
| 51 | | | 60 | 100 nm | | 0.081 | 0.069 | 0.058 | 0.111 | 50 or more | 34 | 21 | Comparative Example |
| 52 | | | 300 | 500 nm | | 0.072 | 0.065 | 0.056 | 0.106 | 50 or more | 46 | 30 | Comparative Example |

| | | | | | | | | | | | | | |
|---|---|---|---|---|---|---|---|---|---|---|---|---|---|
| *1: Immeasurable due to occurrence of mold galling | | | | | | | | | | | | | |

The following has become clear from the test results listed in Table 2. No. 7 is an example in which no crystalline layered material is adhered to the surface layer and a comparative example with respect to the present invention. This comparative example has high kinetic friction coefficients and inferior mold galling resistances. Nos. 8, 13, 18, 23, 28, 33, 38, 43, and 48 have the crystalline layered materials applied on the surface layers, but their average film thicknesses are out of the scope of the present invention, and they are comparative examples with respect to the present invention. These comparative examples have lower kinetic friction coefficients than No. 7 and improved mold galling resistances, but not sufficiently. Nos. 9 to 12, 14 to 17, 19 to 22, 24 to 27, 29 to 32, 34 to 37, 39 to 42, 44 to 47, and 49 to 52 have the crystalline layered materials applied on the surface layers, their average film thicknesses are within the scope of the present invention, and they are examples of the present invention. These inventive examples have lower kinetic friction coefficients and better mold galling resistances as compared to the above-described comparative examples.

### Industrial Applicability

The cold rolled steel sheet of the present invention is excellent in press formability; and therefore applicable in wide-ranging fields with a focus on uses in automotive bodies requiring difficult-to-form materials.

### Reference Signs List

- 1: Friction coefficient measuring specimen
- 2: Specimen stand
- 3: Slide table
- 4: Rollers
- 5: Slide table support
- 6: Bead
- 7: First load cell
- 8: Second load cell
- 9: Rail
- N: Pressing load
- F: Sliding resistance force

## Claims

1. A cold rolled steel sheet **characterized in that** it comprises a film containing a crystalline layered material on a surface thereof, wherein the film has an average film thickness of 10 nm to 2000 nm, wherein the average film thickness is obtained by sputtering a cross section of the film at 45 degrees using a focused ion beam (FIB), extracting arbitrary ten points from a result of observing from the cross section with an ultra-low acceleration scanning electron microscope (SEM) and measuring, an average value thereof being regarded as the average film thickness, wherein the crystalline layered material is a layered double hydroxide represented by [M²⁺₁₋ₓM³⁺ₓ (OH)₂][Aⁿ⁻]_{x/n}**•**zH₂O**,** wherein:
M²⁺ is one or more of Mg²⁺, Ca²⁺, Pb²⁺, and Sn²⁺;
M³⁺ is one or more of Al³⁺, Fe³⁺, Cr³⁺ and Mo³⁺; and
Aⁿ⁻ is one or more of OH⁻, F⁻, CO₃²⁻, Cl⁻, Br⁻, (C₂O₄)²⁻, I⁻, (NO₂)⁻, (SO₄)²⁻, (BrO₃)⁻, (IO₃)⁻, (V₁₀O₂₈)⁶⁻, (Si₂O₅)²⁻, (ClO₄)⁻, (CH₃COO)⁻, [C₆H₄(CO₂)₂]²⁻, (C₆H₅COO)⁻, [C₈H₁₆ (CO₂)₂]²⁻, n(C₈H₁₇SO₄)⁻, n(C₁₂H₂₅SO₄)⁻, n(C₁₈H₃₇SO₄)⁻, and SiO₄⁴⁻, wherein the layered double hydroxide is produced by a process wherein an electric current of 0.01 to 100 A/dm² is flowed in an acidic solution having a pH of 0.5 to 7.0 and containing one or more of M²⁺, one or more of M³⁺ and one or more of Aⁿ⁻ with the cold rolled steel sheet being a cathode.

2. The cold rolled steel sheet according to claim 1, wherein the crystalline layered material is a layered double hydroxide represented by [M²⁺₁₋ₓM³⁺ₓ (OH)₂] [Aⁿ⁻]_{x/n}•zH₂O,
wherein:
M²⁺ is one or more of Mg²⁺, Ca²⁺;
M³⁺ is one or more of Al³⁺, Fe³⁺, and Cr³⁺; and
Aⁿ⁻ is one or more of OH⁻, CO₃²⁻, Cl⁻, and (SO₄)²⁻.

## Patentansprüche

1. Kaltgewalztes Stahlblech, **dadurch gekennzeichnet, dass** es einen Film umfasst, der ein kristallines Schichtmaterial auf einer Oberfläche davon enthält, wobei der Film eine durchschnittliche Filmdicke von 10 nm bis 2000 nm aufweist,
wobei die durchschnittliche Filmdicke erhalten wird durch Sputtern eines Querschnitts des Films bei 45 Grad unter Verwendung eines fokussierten lonenstrahls (FIB), Extrahieren von willkürlichen zehn Punkten aus einem Ergebnis der Beobachtung aus dem Querschnitt mit einem Rasterelektronenmikroskop (REM) mit ultraniedriger Beschleunigung und Messen, wobei ein Durchschnittswert davon als die durchschnittliche Filmdicke angesehen wird,
wobei das kristalline Schichtmaterial ein geschichtetes Doppelhydroxid ist, dargestellt durch [M²⁺₁₋ₓM³⁺ₓ(OH)₂][Aⁿ⁻]_{x/n}•zH₂O, wobei:
M²⁺ eines oder mehrere aus Mg²⁺, Ca²⁺, Pb²⁺ und Sn²⁺ ist;
M³⁺ eines oder mehrere aus Al³⁺, Fe³⁺, Cr³⁺ und Mo³⁺ ist; und
Aⁿ⁻ eines oder mehrere aus OH⁻, F⁻, CO₃²⁻, Cl⁻, Br, (C₂O₄)²⁻, I⁻, (NO₃)⁻, (SO₄)²⁻, (BrO₃)⁻, (IO₃)⁻, (V₁₀O₂₈)⁶⁻, (Si₂O₅)²⁻, (ClO₄)⁻, (CH₃COO)⁻, [C₆H₄(_{C}O₂)₂]²⁻, (c₆H₅COO)⁻, [C₈H₁₆(CO₂)_{2]}²⁻, n(C₈H₁₇SO₄)⁻, n(C₁₂H₂₅SO₄)⁻, n(C₁₈H₃₇SO₄)⁻ und SiO₄⁴⁻ ist, wobei das geschichtete Doppelhydroxid durch ein Verfahren hergestellt wird, bei dem ein elektrischer Strom von 0,01 bis 100 A/dm² in einer sauren Lösung mit einem pH-Wert von 0,5 bis 7,0 fließt, die eines oder mehrere aus M²⁺, eines oder mehrere aus M³⁺ und eines oder mehrere aus Aⁿ⁻ enthält, wobei das kaltgewalzte Stahlblech eine Kathode ist.

2. Kaltgewalztes Stahlblech nach Anspruch 1, wobei das kristalline Schichtmaterial ein geschichtetes Doppelhydroxid ist, dargestellt durch [M²⁺₁₋ₓM³⁺ₓ(OH)₂][Aⁿ⁻]_{x/n}•zH₂O, wobei:
M²⁺ eines oder mehrere aus Mg²⁺, Ca²⁺ ist;
M³⁺ eines oder mehrere aus Al³⁺, Fe³⁺ und Cr³⁺ ist; und
Aⁿ⁻ eines oder mehrere aus OH⁻, CO₃²⁻, Cl⁻ und (SO₄)²⁻ ist.

## Revendications

1. Tôle d'acier laminée à froid **caractérisée en ce qu'**elle comprend un film contenant un matériau stratifié cristallin sur une surface de celui-ci, dans laquelle le film a une épaisseur moyenne de film de 10 nm à 2 000 nm, dans laquelle l'épaisseur moyenne de film est obtenue en pulvérisant une coupe transversale du film à 45 degrés en utilisant un faisceau d'ions focalisé (FIB), en extrayant arbitrairement dix points à partir d'un résultat d'observation de la coupe transversale à l'aide d'un microscope électronique à balayage (SEM) à très faible accélération et en mesurant une valeur moyenne de ceux-ci qui est considérée comme étant l'épaisseur moyenne de film, dans laquelle le matériau stratifié cristallin est un hydroxyde à double couche représenté par [M²⁺₁₋ₓM³⁺x(OH)₂][Aⁿ⁻]_{x/n}•n-zH₂O, où :
M²⁺ est un ou plusieurs parmi Mg²⁺, Ca²⁺, Pb²⁺, et Sn²⁺ ;
M³⁺ est un ou plusieurs parmi Al³⁺, Fe³⁺, Cr³⁺ et Mo³⁺ ; et
Aⁿ⁻ est un ou plusieurs parmi OH⁻, F⁻, CO₃²⁻, Cl⁻, Br, (C₂O₄)²⁻, I⁻, (NO₃)⁻, (SO₄)²⁻ , (BrO₃)⁻, (IO₃)⁻, (V₁₀O₂₈)⁶⁻, (Si₂O₅)²⁻, (ClO₄)⁻, (CH₃COO)⁻, [C₆H₄(CO₂)₂]²⁻, (C₆H₅COO)⁻, [C₈H₁₆(CO₂)₂]²⁻, n(C₈H₁₇SO₄)⁻, n(C₁₂H₂₅SO₄)⁻, n(C₁₈H₃₇SO4)⁻, et SiO4⁴⁻, dans laquelle l'hydroxyde à double couche est produit par un processus dans lequel un courant électrique de 0,01 à 100 A/dm² circule dans une solution acide ayant un pH de 0,5 à 7,0 et contenant un ou plusieurs parmi M²⁺, un ou plusieurs parmi M³⁺ et un ou plusieurs parmi Aⁿ⁻, la tôle d'acier laminée à froid étant une cathode.

2. Tôle d'acier laminée à froid selon la revendication 1, dans laquelle le matériau stratifié cristallin est un hydroxyde à double couche représenté par [M²⁺1-xM³⁺x(OH)₂][Aⁿ⁻]_{x/n}•zH₂O, où :
M²⁺ est un ou plusieurs parmi Mg²⁺, Ca²⁺ ;
M³⁺ est un ou plusieurs parmi Al³⁺, Fe³⁺, et Cr³⁺ ; et
Aⁿ⁻ est un ou plusieurs parmi OH⁻, CO₃²⁻, Cl⁻, et (SO₄)²⁻.
